(19) Europäisches Patentamt
European Patent Office
Office européen des brevets

(11) EP 4 660 341 A1

(12) **EUROPEAN PATENT APPLICATION**
published in accordance with Art. 153(4) EPC

(43) Date of publication:
**10.12.2025 Bulletin 2025/50**

(21) Application number: **24750303.0**

(22) Date of filing: **30.01.2024**

(51) International Patent Classification (IPC):
*C22C 38/00* (2006.01)    *B60B 37/00* (2006.01)
*C21D 1/10* (2006.01)    *C21D 9/00* (2006.01)
*C22C 38/04* (2006.01)    *C22C 38/54* (2006.01)

(52) Cooperative Patent Classification (CPC):
B60B 37/00; C21D 1/10; C21D 9/00; C22C 38/00;
C22C 38/04; C22C 38/54

(86) International application number:
**PCT/JP2024/002927**

(87) International publication number:
**WO 2024/162354 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023012860**

(71) Applicant: NIPPON STEEL CORPORATION
Chiyoda-ku
Tokyo 100-8071 (JP)

(72) Inventors:
• **MAKINO, Taizo**
**Tokyo 100-8071 (JP)**
• **KOZUKA, Chihiro**
**Tokyo 100-8071 (JP)**
• **YAMAZAKI, Yohsuke**
**Tokyo 100-8071 (JP)**
• **HATA, Toshiyuki**
**Tokyo 100-8071 (JP)**

(74) Representative: **J A Kemp LLP**
**80 Turnmill Street**
**London EC1M 5QU (GB)**

(54) **RAILWAY AXLE**

(57)    Provided is a railway axle in which a non-fitting portion can have a sufficient fatigue limit and the fatigue limit of a fitting portion can be increased. A railway axle (1) according to the present disclosure includes fitting portions (2) with a diameter DW mm and a non-fitting portion (3). The non-fitting portion (3) includes a parallel portion (31) having a diameter DA mm that is smaller than the diameter DW mm, and a fillet R portion (32). DW/DA is 1.10 to 1.30, and a radius of curvature Rf is greater than or equal to a critical radius of curvature Rcr mm defined by Formula (1) and smaller than or equal to 60.0 mm, where Rf is a radius of curvature of a portion of a surface of the fillet R portion (32), the portion being adjacent to a surface of the parallel portion (31), and a reference total case depth $C_{AT}$ mm is a smaller depth out of total case depths at a 0.23Rf position and a 0.57Rf position in an axial direction of the railway axle (1) from an R end (2E) of the fillet R portion (32) toward the parallel portion (31) side, the R end being an end that is in contact with the parallel portion (31).
[Expression 1]

$$Rcr = 0.0822DA \cdot \exp\left(\frac{8.38C_{AT}}{DA}\right) \quad (1)$$

FIG. 1

**Description**

TECHNICAL FIELD

The present invention relates to an axle, and more particularly relates to a railway axle used for a railway vehicle.

BACKGROUND ART

A railway axle includes fitting portions that are press-fittable to railway wheels and a non-fitting portion continuous with the fitting portions. Specifically, interference is provided for the fitting portions of the railway axle so that the hole diameter of a hub part of the railway wheel is slightly smaller than the diameter of the fitting portions of the railway axle. During use, the railway axle supports the weight of a railway vehicle. The railway axle further receives a force in the horizontal direction due to contact between a railway wheel and a rail each time the railway vehicle passes a curved rail section (passes through a curve). In other words, when the railway vehicle passes through a curve, the railway axle repeatedly receives rotating bending stress each time the railway wheel makes one full rotation. The amplitude of such bending stress increases when the railway vehicle passes through a curve.

As described above, the railway axle includes the fitting portions, on each of which a railway wheel is press-fitted, and each fitting portion has a contact interfacial pressure against the hole of the hub part of the railway wheel. Therefore, in each fitting portion for a railway wheel, slight slippage may repeatedly occur due to contact between the fitting portion and the railway wheel. Hereinafter, slight slippage which occurs due to contact between a fitting portion for a railway wheel and the railway wheel will be referred to as "fretting". It is known that a fitting portion of a railway axle may be damaged due to fretting (hereinafter also referred to as "fretting fatigue").

To suppress such fretting fatigue, the aforementioned fitting portion of the railway axle may be induction hardened. In the surface layer of the fitting portion, hardness increases in the induction hardened region. In the surface layer of the fitting portion, the region where hardness is increased by performing induction hardening as described above will be referred to as a "hardened layer". Compressive residual stress is generated in the hardened layer. The compressive residual stress generated due to the formation of the hardened layer suppresses the widening of cracks caused by fretting. In other words, the hardened layer of the railway axle formed by performing induction hardening can suppress fretting fatigue in the railway axle.

Each of Japanese Patent Application Publication No. 10-8202 (Patent Literature 1), Japanese Patent Application Publication No. 11-279696 (Patent Literature 2), and Japanese Patent Application Publication No. 2000-73140 (Patent Literature 3) proposes a railway axle where fretting fatigue in a fitting portion is suppressed by performing induction hardening.

The railway axle disclosed in Patent Literature 1 contains, in mass%, C: 0.3 to 0.48%, Si: 0.05 to 1%, Mn: 0.5 to 2%, Cr: 0.5 to 1.5%, Mo: 0.15 to 0.3%, and Ni: 0 to 2.4%. The fitting portions of this railway axle have a hardened layer with a Vickers hardness of 400 or more. The fitting portions further have a region of martensite or bainite located inward thereof. In this railway axle, the depth of the hardened layer is 1 to 4.5 mm. It is described in Patent Literature 1 that the aforementioned railway axle has a high fatigue limit.

The railway axle disclosed in Patent Literature 2 contains, in mass%, C: 0.3 to 0.48%, Si: 0.05 to 1%, Mn: 0.5 to 2%, Cr: 0.5 to 1.5%, Mo: 0.15 to 0.3%, and Ni: 0 to 2.4%. The fitting portions of this railway axle have a hardened layer with a Vickers hardness of 400 or more. The fitting portions further have a region of tempered martensite or bainite located inward thereof. In this railway axle, the depth of the hardened layer is 5.0 mm or more, and is 10% or less of the diameter of the fitting portion. It is described in Patent Literature 2 that the aforementioned railway axle has a high fretting fatigue limit.

The railway axle disclosed in Patent Literature 3 contains, in mass%, C: 0.3 to 0.48%, Si: 0.05 to 1%, Mn: 0.5 to 2%, Cr: 0 to 1.5%, Mo: 0 to 0.3%, and Ni: 0 to 2.4%. The fitting end portions as well as regions around the fitting end portions of this railway axle have a hardened layer with a Vickers hardness of 400 or more. The ratio (K/D) of a thickness (K) of the hardened layer to the fitting portion diameter (D) is 0.005 to 0.05. An upper portion of the hardened layer contains B in an amount in a range of 0.02 to 2%. It is described in Patent Literature 3 that the aforementioned railway axle has an excellent fatigue limit.

CITATION LIST

PATENT LITERATURE

Patent Literature 1: Japanese Patent Application Publication No. 10-8202
Patent Literature 2: Japanese Patent Application Publication No. 11-279696

Patent Literature 3: Japanese Patent Application Publication No. 2000-73140

NON-PATENT LITERATURE

Non-Patent Literature 1: Review of the fatigue damage tolerance of high-speed railway axles in Japan, Taizo Makino, Takanori Kato, Kenji Hirakawa, Engineering Fracture Mechanics 78 (2011) 810 to 825

SUMMARY OF INVENTION

TECHNICAL PROBLEM

Patent Literatures 1 to 3 disclose techniques in which a railway axle is induction hardened to suppress fretting fatigue in the fitting portions. When induction hardening is performed on the fitting portions of a railway axle to form a hardened layer, fretting fatigue in the fitting portion can be suppressed.

As described above, in order to increase the fatigue limit of the railway axle, the fatigue limit of the fitting portions, which is typically the fretting fatigue limit, needs to be increased. On the other hand, the railway axle needs to have a sufficient fatigue limit even in the non-fitting portion. Thus, when the fatigue limit of the fitting portion is to be increased, it is desirable to obtain a sufficient fatigue limit for the non-fitting portion.

An object of the present disclosure is to provide a railway axle in which the non-fitting portion can have a sufficient fatigue limit and the fatigue limit of the fitting portion can be increased.

SOLUTION TO PROBLEM

A railway axle according to the present disclosure includes:

a fitting portion that has a circular columnar shape having a diameter DW mm and is press-fittable to a railway wheel; and
a non-fitting portion continuous with the fitting portion,
wherein the non-fitting portion includes:

a circular columnar parallel portion having a diameter DA mm that is smaller than the diameter DW mm, and
a fillet R portion that is disposed between the fitting portion and the parallel portion and has a surface that is curved and recessed in a cross section including a center axis of the railway axle,

the fitting portion and the non-fitting portion include:

a hardened layer formed in a surface layer of the fitting portion and a surface layer of the non-fitting portion, and
a base metal portion located inward of the hardened layer,

a chemical composition of the base metal portion consists of, in mass%,
C: 0.30 to 0.42%,
Si: 0.10 to 0.50%,
Mn: 0.40 to 1.20%,
P: more than 0% and 0.020% or less,
S: more than 0% and 0.0400% or less,
N: more than 0% and 0.0200% or less,
O: more than 0% and 0.0040% or less,
Ca: 0 to 0.0010%,
Cr: 0 to 0.30%,
Mo: 0 to 0.10%,
Cu: 0 to 0.30%,
Ni: 0 to 0.30%,
Al: 0 to 0.100%,
V: 0 to 0.060%,
Ti: 0 to 0.020%,
Nb: 0 to 0.030%, and
B: 0 to 0.0050%,
with the balance being Fe and impurities,

DW/DA, which is a ratio of the diameter DW to the diameter DA, is 1.10 to 1.30, and

a radius of curvature Rf is greater than or equal to a critical radius of curvature Rcr mm defined by Formula (1) and smaller than or equal to 60.0 mm,

where Rf is a radius of curvature of a portion of a surface of the fillet R portion in a cross section including a center axis of the railway axle, the portion being adjacent to a surface of the parallel portion, and a reference total case depth $C_{AT}$ mm is a smaller depth out of total case depths at a 0.23Rf position and a 0.57Rf position in an axial direction of the railway axle from an R end of the fillet R portion toward the parallel portion side, the R end being an end that is in contact with the parallel portion.

[Expression 1]

$$Rcr = 0.0822DA \cdot \exp\left(\frac{8.38C_{AT}}{DA}\right) \quad (1)$$

ADVANTAGEOUS EFFECTS OF INVENTION

In the railway axle according to the present disclosure, the non-fitting portion can have a sufficient fatigue limit and the fatigue limit of the fitting portion can be increased.

BRIEF DESCRIPTION OF DRAWINGS

[FIG. 1] FIG. 1 is a side view of a railway axle according to the present embodiment.

[FIG. 2] FIG. 2 is a cross-sectional view of a plane including a center axis C1 of the railway axle of the present embodiment illustrated in FIG. 1.

[FIG. 3] FIG. 3 is an S-N diagram based on representative stress.

[FIG. 4] FIG. 4 is a diagram illustrating a crack starting position in a cross section including a center axis of a test axle.

[FIG. 5] FIG. 5 is an enlarged view of a vicinity of a fitting portion 2 of a railway axle 1 shown in FIG. 1.

[FIG. 6] FIG. 6 is a diagram illustrating a relationship between a fitting contact angle θ and a fatigue limit improvement rate ø when DW/DA is changed.

[FIG. 7] FIG. 7 is a diagram illustrating a relationship between Rf/k and the fitting contact angle θ.

[FIG. 8] FIG. 8 is a diagram illustrating a relationship between the radius of curvature Rf and a fitting portion fatigue limit ratio based on FIGS. 6 and 7.

[FIG. 9] FIG. 9 is a diagram illustrating a relationship between a stress concentration factor Kt at the R end, a curvature radius ratio Rf/DA, and DW/DA obtained through FEM analysis.

[FIG. 10] FIG. 10 is a diagram illustrating a relationship between the radius of curvature Rf and the fatigue limit of a non-fitting portion due to nominal stress of the parallel portion.

[FIG. 11] FIG. 11 is a diagram illustrating a relationship between a curvature radius ratio Rcr/DA and $2C_{AT}/DA$.

DESCRIPTION OF EMBODIMENTS

The inventors of the present invention investigated and examined means for obtaining a sufficient fatigue limit for the non-fitting portion and for increasing the fatigue limit of the fitting portion in a railway axle. As a result, the inventors of the present invention obtained the following findings.

In order to obtain sufficient fatigue limits in the non-fitting portion and the fitting portion, the chemical composition of the base metal portion located inward of the hardened layer is preferably a chemical composition consisting of, in mass%, C: 0.30 to 0.42%, Si: 0.10 to 0.50%, Mn: 0.40 to 1.20%, P: more than 0% and 0.020% or less, S: more than 0% and 0.0400% or less, N: more than 0% and 0.0200% or less, O: more than 0% and 0.0040% or less, Ca: 0 to 0.0010%, Cr: 0 to 0.30%, Mo: 0 to 0.10%, Cu: 0 to 0.30%, Ni: 0 to 0.30%, Al: 0 to 0.100%, V: 0 to 0.060%, Ti: 0 to 0.020%, Nb: 0 to 0.030%, and B: 0 to 0.0050%, with the balance being Fe and impurities.

The inventors of the present invention further examined means for increasing the fatigue limit of the fitting portion while maintaining a sufficient fatigue limit for the non-fitting portion in the railway axle having the aforementioned chemical composition, focusing on the shape of the railway axle.

In general, railway axle fatigue design is performed separately for fitting portions and non-fitting portions. The non-fitting portion includes a parallel portion and fillet R portions. Each fillet R portion has a surface that is curved and recessed in a cross section including a center axis of the railway axle. The surface of the fillet R portion is smoothly curved and recessed. The surface of the fillet R portion in a cross section including the center axis of the railway axle may have a single curvature or multiple curvatures. For example, on the surface of the fillet R portion, the radius of curvature of a portion adjacent to the surface of an end of the parallel portion may differ from the radius of curvature of a portion adjacent to the surface of an end of the fitting portion. However, even when the surface of the fillet R portion have multiple curvatures, the surface of the fillet R portion is smoothly curved and recessed.

Usually, when a bending moment is applied to a railway axle, stress concentration will occur at the R end of the fillet R portion, the R end being the end that is in contact with the parallel portion. The stress concentration that occurs at the R end is affected by a radius of curvature Rf of a portion of the surface of the fillet R portion that is adjacent to the surface of the parallel portion. Specifically, if the radius of curvature Rf of the fillet R portion is reduced, then the stress concentration at the R end increases. The maximum stress applied to the R end is expressed as a stress concentration factor Kt × nominal stress. Therefore, if the radius of curvature Rf of the fillet R portion is excessively small, then the stress concentration factor Kt excessively increases. Thus, the maximum stress at the R end will excessively increase. As a result, the stress applied to the R end exceeds the fatigue limit at the R end, making it more likely that a crack forms.

In conventional railway axles, the radius of curvature Rf is set in consideration of the above phenomena, such that the stress at the R end does not exceed the fatigue limit at the R end. As described in Non-Patent Literature 1, in conventional railway axles, the radius of curvature Rf of the fillet R portion is set to about 100 mm.

On the other hand, as will be described later, in the fitting portion, the fatigue limit increases when the radius of curvature Rf is reduced. However, if the radius of curvature Rf is reduced, as described above, stress concentration occurs at the R end of the fillet R portion of the non-fitting portion. That is, if the radius of curvature Rf is reduced, the fatigue limit of the non-fitting portion decreases.

In view of this, the inventors of the present invention re-examined whether or not the R end is the weakest point of the non-fitting portion when a bending moment is applied to a railway axle. As a result, in a fatigue test performed under conditions of high stress and a short service life, a crack was formed at a surface initiating point of the R end. On the other hand, in a fatigue test performed under conditions of low stress and a long service life near the fatigue limit, cracks were formed at, as an internal initiating point, a quenching boundary position located inward of the parallel portion (the boundary between the hardened layer and the base metal portion), rather than at the surface initiating point of the R end. That is, the inventors of the present invention revealed for the first time that cracks forming in the non-fitting portion do not necessarily form at the surface initiating point of the R end, but may also form at the internal initiating point of the parallel portion.

Stress concentration is unlikely to have an influence at the internal initiating point. Therefore, the stress applied to the internal initiating point is close to the nominal stress. In addition, a local fatigue limit at the internal initiating point is lower than a local fatigue limit at the surface initiating point of the R end. Therefore, when the radius of curvature Rf is reduced to increase the fatigue limit of the fitting portion, even if stress concentration occurs at the R end and the stress applied to the R end increases, if the stress is less than or equal to the local fatigue limit at the R end and the stress applied to the internal initiating point is less than or equal to the local fatigue limit at the internal initiating point, the fatigue limit of the fitting portion can be increased while maintaining a sufficient fatigue limit for the non-fitting portion.

The railway axle of the present embodiment has been completed based on the above technical ideas, and the gist of the railway axle of the present embodiment is as follows.

A railway axle according to a first aspect includes:

a fitting portion that has a circular columnar shape having a diameter DW mm and is press-fittable to a railway wheel; and
a non-fitting portion continuous with the fitting portion,
wherein the non-fitting portion includes:

a circular columnar parallel portion having a diameter DA mm that is smaller than the diameter DW mm, and
a fillet R portion that is disposed between the fitting portion and the parallel portion and has a surface that is curved and recessed in a cross section including a center axis of the railway axle,

the fitting portion and the non-fitting portion include:

a hardened layer formed in a surface layer of the fitting portion and a surface layer of the non-fitting portion, and
a base metal portion located inward of the hardened layer,

a chemical composition of the base metal portion consists of, in mass%,
C: 0.30 to 0.42%,
Si: 0.10 to 0.50%,
Mn: 0.40 to 1.20%,
P: more than 0% and 0.020% or less,
S: more than 0% and 0.0400% or less,

N: more than 0% and 0.0200% or less,
O: more than 0% and 0.0040% or less,
Ca: 0 to 0.0010%,
Cr: 0 to 0.30%,
Mo: 0 to 0.10%,
Cu: 0 to 0.30%,
Ni: 0 to 0.30%,
Al: 0 to 0.100%,
V: 0 to 0.060%,
Ti: 0 to 0.020%,
Nb: 0 to 0.030%, and
B: 0 to 0.0050%,
with the balance being Fe and impurities,
DW/DA, which is a ratio of the diameter DW to the diameter DA, is 1.10 to 1.30, and
a radius of curvature Rf is greater than or equal to a critical radius of curvature Rcr mm defined by Formula (1) and smaller than or equal to 60.0 mm,
where Rf is a radius of curvature of a portion of a surface of the fillet R portion in a cross section including a center axis of the railway axle, the portion being adjacent to a surface of the parallel portion, and a reference total case depth $C_{AT}$ mm is a smaller depth out of total case depths at a 0.23Rf position and a 0.57Rf position in an axial direction of the railway axle from an R end of the fillet R portion toward the parallel portion side, the R end being an end that is in contact with the parallel portion.

[Expression 2]

$$Rcr = 0.0822 DA \cdot \exp\left(\frac{8.38 C_{AT}}{DA}\right) \quad (1)$$

A railway axle according to a second aspect is

the railway axle according to the first aspect,
wherein a chemical composition of the base metal portion contains, in mass%, one or more types of element selected from the group consisting of:

Ca: 0.0001 to 0.0010%,
Cr: 0.01 to 0.30%,
Mo: 0.01 to 0.10%,
Cu: 0.01 to 0.30%,
Ni: 0.01 to 0.30%,
Al: 0.001 to 0.100%,
V: 0.001 to 0.060%,
Ti: 0.001 to 0.020%,
Nb: 0.001 to 0.030%, and
B: 0.0001 to 0.0050%.

Hereinafter, a railway axle according to the present embodiment is described in detail.

[Configuration of railway axle]

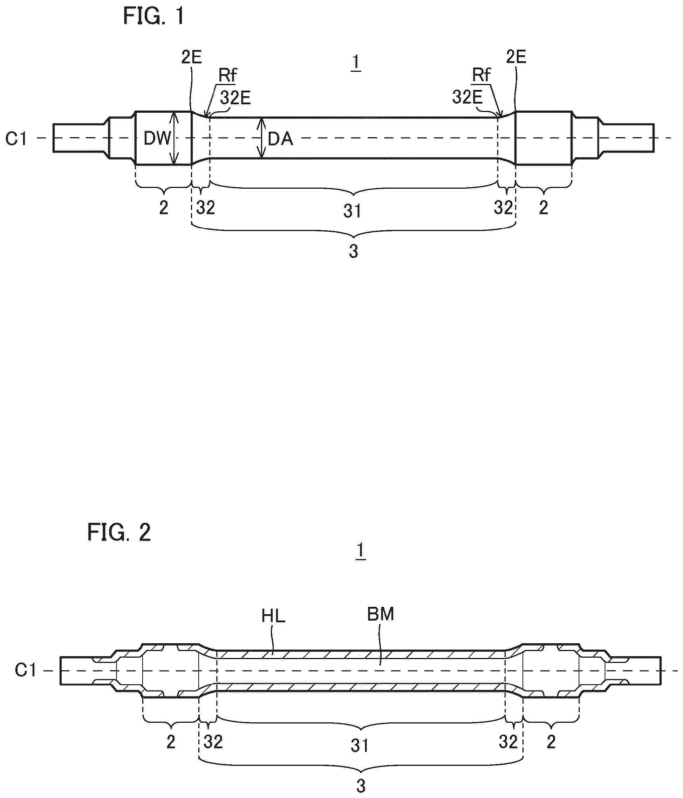

FIG. 1 is a side view illustrating the railway axle according to the present embodiment. Referring to FIG. 1, a railway axle 1 of the present embodiment includes fitting portions 2 and a non-fitting portion 3. Each of the fitting portions 2 has a circular columnar shape having a diameter DW (mm). The center axes of the fitting portions 2 are aligned with a center axis C1 of the railway axle 1. The center axis C1 of the railway axle 1 extends in an axial direction of the railway axle 1. A wheel seat end 2E of each of the fitting portions 2 is continuous with an end of the non-fitting portion 3. In FIG. 1, the railway axle 1 includes a pair of fitting portions 2.

The non-fitting portion 3 is continuous with the fitting portions 2. In FIG. 1, the non-fitting portion 3 is disposed between the pair of fitting portions 2. The center axis of the non-fitting portion 3 is aligned with the center axis C1 of the railway axle 1. The non-fitting portion 3 includes a parallel portion 31 and fillet R portions 32. The parallel portion 31 has a circular columnar shape having a diameter DA (mm). The diameter DA is smaller than the diameter DW.

Each fillet R portion 32 has a surface that is curved and recessed in a cross section including the center axis C1 of the railway axle 1. The surface of the fillet R portion 32 is smoothly curved and recessed. The surface of the fillet R portion 32 in a cross section including the center axis C1 of the railway axle 1 may have a single curvature or multiple curvatures. For example, on the surface of the fillet R portion 32, the radius of curvature of a portion adjacent to the surface of the parallel portion 31 may differ from the radius of curvature of a portion adjacent to the surface of the fitting portion 2. However, even when the surface of the fillet R portion has multiple curvatures, the surface of the fillet R portion 32 is smoothly curved and recessed.

At the surface of the fillet R portion 32 in a cross section including the center axis C1 of the railway axle 1, the radius of curvature of the portion adjacent to the surface of the parallel portion 31 is Rf (mm). When the surface of the fillet R portion 32 in a cross section including the center axis C1 of the railway axle 1 has a single curvature, the radius of curvature of the entire surface of the fillet R portion 32 is Rf (mm).

As described above, the diameter DA of the parallel portion 31 is smaller than the diameter DW of the fitting portions 2. Therefore, a step height is formed between the parallel portion 31 and the fitting portions 2. The railway axle 1 may be solid or hollow. Although not particularly limited, the diameter DA of the parallel portion 31 is, for example, 100 to 200 mm. Although not particularly limited, the diameter DW of the fitting portions 2 is, for example, 110 to 260 mm.

FIG. 2 is a cross-sectional view along a plane including the center axis C1 of the railway axle 1 illustrated in FIG. 1. Referring to FIG. 2, the fitting portions 2 and the non-fitting portion 3 include a hardened layer HL and a base metal portion BM. The hardened layer HL is formed in surface layers of the fitting portions 2 and the non-fitting portion 3. Specifically, the hardened layer HL is formed in the surface layer in a range from the surfaces of the fitting portion 2 and the non-fitting portion 3 to predetermined depths. Note that in FIG. 2, the hardened layer HL is formed in a portion of the surface layer of each of the fitting portions 2 and is not formed in the other portion. Thus, the hardened layer HL need not be formed over the entire surface layer of the fitting portion 2, and may be formed at least in a region of one portion of the surface layer of the fitting portion 2 in the axial direction of the railway axle 1. Further, the hardened layer HL may be formed over the entire surface layer of the fitting portion 2. Further, the hardened layer HL may be formed over the entire surface layer of the non-fitting portion 3.

[Features of Railway Axle 1 of Embodiments]

The railway axle 1 of the present embodiment includes the following Features.

(Feature 1)

The chemical composition of the base metal portion BM consists of, in mass%, C: 0.30 to 0.42%, Si: 0.10 to 0.50%, Mn: 0.40 to 1.20%, P: more than 0% and 0.020% or less, S: more than 0% and 0.0400% or less, N: more than 0% and 0.0200% or less, O: more than 0% and 0.0040% or less, Ca: 0 to 0.0010%, Cr: 0 to 0.30%, Mo: 0 to 0.10%, Cu: 0 to 0.30%, Ni: 0 to 0.30%, Al: 0 to 0.100%, V: 0 to 0.060%, Ti: 0 to 0.020%, Nb: 0 to 0.030%, and B: 0 to 0.0050%, with the balance being Fe and impurities.

(Feature 2)

DW/DA, which is the ratio of the diameter DW to the diameter DA, is 1.10 to 1.30.

(Feature 3)

With a reference total case depth $C_{AT}$ mm being a smaller depth out of total case depths at a 0.23Rf position and a 0.57Rf position in the axial direction of the railway axle 1 from an R end 32E of the fillet R portion 32 toward the parallel portion 31 side, the R end 32E being the end that is in contact with the parallel portion 31, the radius of curvature Rf is greater than or equal to a critical radius of curvature Rcr mm defined by Formula (1) and smaller than or equal to 60.0 mm.
[Expression 3]

$$\mathrm{Rcr} = 0.0822 \mathrm{DA} \cdot \exp\left(\frac{8.38 C_{AT}}{\mathrm{DA}}\right) \quad (1)$$

Hereinafter, Features 1 to 3 will be described.

[Regarding chemical composition of base metal portion BM]

In the present embodiment, the chemical composition of the base metal portion BM contains the following elements. Hereinafter, "%" in relation to an element means mass percent unless otherwise specified.

C: 0.30 to 0.42%

Carbon (C) increases the hardness of steel. C also increases the hardness of a hardened layer HL formed by induction hardening. When the C content is 0.30% or more, the above effects can be sufficiently obtained. On the other hand, when the C content is 0.42% or less, quench cracking during induction hardening is sufficiently suppressed. Accordingly, the C content is set to 0.30 to 0.42%.

A lower limit of the C content is preferably 0.32%, and more preferably 0.35%.

An upper limit of the C content is preferably 0.40%, and more preferably 0.38%.

Si: 0.10 to 0.50%

Silicon (Si) deoxidizes the steel. Si also increases the temper softening resistance of the steel, and increases the fatigue limit of the railway axle 1. When the Si content is 0.10% or more, the above effects can be sufficiently obtained. On the other hand, when the Si content is 0.50% or less, quench cracking during induction hardening is sufficiently suppressed. Accordingly, the Si content is set to 0.10 to 0.50%.

A lower limit of the Si content is preferably 0.12%, more preferably 0.15%, and further preferably 0.18%.

An upper limit of the Si content is preferably 0.48%, more preferably 0.45%, and further preferably 0.40%.

Mn: 0.40 to 1.20%

Manganese (Mn) increases the hardenability of the steel and makes the hardened layer HL sufficiently thick, thereby increasing the fatigue limit of the railway axle 1. When the Mn content is 0.40% or more, the above effects can be sufficiently obtained. On the other hand, when the Mn content is 1.20% or less, the hardened layer HL of the fitting portion 2 is inhibited from being excessively thick. Thus, the fitting portion 2 can have a sufficient fatigue limit. Accordingly, the Mn content is set to 0.40 to 1.20%.

A lower limit of the Mn content is preferably 0.42%, more preferably 0.45%, further preferably 0.55%, and further preferably 0.65%.

An upper limit of the Mn content is preferably 1.15%, more preferably 1.10%, further preferably 1.07%, and further preferably 0.95%.

P: more than 0% and 0.020% or less

Phosphorus (P) is an impurity which is unavoidably contained. In other words, the P content is more than 0%. P segregates at grain boundaries, thereby reducing the fatigue limit of the steel. When the P content is 0.020% or less, the railway axle 1 can have a sufficient fatigue limit. Accordingly, the P content is set to more than 0% and 0.020% or less.

An upper limit of the P content is preferably 0.018%, more preferably 0.016%, further preferably 0.015%, and further preferably 0.014%.

The P content is preferably as low as possible. However, excessively reducing the P content will significantly increase the production cost. Therefore, when industrial production is taken into consideration, a lower limit of the P content is preferably 0.001%, and more preferably 0.002%.

S: more than 0% and 0.0400% or less

Sulfur (S) is an impurity which is unavoidably contained. In other words, the S content is more than 0%. S combines with Mn to form MnS. MnS reduces the fatigue limit of the steel. When the S content is 0.0400% or less, the railway axle 1 can have a sufficient fatigue limit. Accordingly, the S content is set to more than 0% and 0.0400% or less.

An upper limit of the S content is preferably 0.0300%, more preferably 0.0200%, further preferably 0.0150%, and further preferably 0.0100%.

The S content is preferably as low as possible. However, excessively reducing the S content will significantly increase the production cost. Therefore, when industrial production is taken into consideration, a lower limit of the S content is preferably 0.0001%, more preferably 0.0005%, further preferably 0.0010%, and further preferably 0.0030%.

N: more than 0% and 0.0200% or less

Nitrogen (N) is an impurity that is unavoidably contained. In other words, the N content is more than 0%. N combines with Al and the like to form fine nitrides, thereby refining the grains. However, if the N content is too high, coarse nitrides will be formed, and consequently the fatigue limit of the steel will decrease. When the N content is 0.0200% or less, the formation of coarse nitrides is suppressed. Thus, the railway axle 1 can have a sufficient fatigue limit. Accordingly, the N content is set to more than 0% and 0.0200% or less.

An upper limit of the N content is preferably 0.0150%, more preferably 0.0120%, further preferably 0.0100%, further preferably 0.0090%, further preferably 0.0080%, and further preferably 0.0070%.

A lower limit of the N content is preferably 0.0010%, more preferably 0.0020%, and further preferably 0.0030%.

O: more than 0% and 0.0040% or less

Oxygen (O) is an impurity that is unavoidably contained. In other words, the O content is more than 0%. In some cases, O forms coarse oxides which become a starting point of fatigue fracture. When the O content is 0.0040% or less, the formation of coarse oxides is suppressed. Thus, the railway axle 1 can have a sufficient fatigue limit. Accordingly, the O content is set to 0.0040% or less.

An upper limit of the O content is preferably 0.0030%, more preferably 0.0025%, further preferably 0.0020%, and further preferably 0.0015%.

The O content is preferably as low as possible. However, excessively reducing the O content will significantly increase the production cost. Therefore, when industrial production is taken into consideration, a lower limit of the O content is preferably 0.0001%, more preferably 0.0002%, and further preferably 0.0005%.

The balance of the chemical composition of the base metal portion BM of the railway axle 1 according to the present embodiment is Fe and impurities. Here, the term "impurities" in a chemical composition means elements which are mixed in from ore or scrap as a raw material or from the production environment or the like when the steel material for the railway axle 1 is industrially produced and which are unintentionally contained, and which are permitted within a range that does not adversely affect the railway axle 1 of the present embodiment.

[Regarding Optional Elements]

The chemical composition of the base metal portion BM of the railway axle 1 according to the present embodiment may further contain one or more types of element selected from the group consisting of, in lieu of a part of Fe,

Ca: 0 to 0.0010%,
Cr: 0 to 0.30%,
Mo: 0 to 0.10%,
Cu: 0 to 0.30%,
Ni: 0 to 0.30%,
Al: 0 to 0.100%,
V: 0 to 0.060%,
Ti: 0 to 0.020%,
Nb: 0 to 0.030%, and
B: 0 to 0.0050%. All of these elements are optional elements. Hereinafter, these optional elements will be described.

[Group 1: Ca]

The chemical composition of the base metal portion BM of the railway axle 1 according to the present embodiment may further contain Ca in lieu of a part of Fe.

Ca: 0 to 0.0010%

Calcium (Ca) is an impurity, and may be 0%. Ca causes silicate inclusions (group C specified in JIS G 0555: 2003) to agglomerate, thus reducing the fatigue limit. When the Ca content is 0.0010% or less, agglomeration of silicate inclusions can be sufficiently suppressed. As a result, the railway axle 1 can have a sufficient fatigue limit. Accordingly, the Ca content is set to 0 to 0.0010%.

The Ca content is preferably as low as possible. However, excessively reducing the Ca content will significantly increase the production cost. Therefore, when industrial production is taken into consideration, a lower limit of the Ca content is preferably 0.0001%, more preferably 0.0002%, and further preferably 0.0003%.

An upper limit of the Ca content is preferably 0.0009%, more preferably 0.0008%, and further preferably 0.0006%.

[Group 2: Cr, Mo, Cu, and Ni]

The chemical composition of the base metal portion BM of the railway axle 1 according to the present embodiment may further contain one or more types of element selected from the group consisting of Cr, Mo, Cu, and Ni in lieu of a part of Fe. Each of these elements is an optional element, and each element increases the strength of the steel through dissolution.

Cr: 0 to 0.30%

Chromium (Cr) is an optional element and need not be contained. In other words, the Cr content may be 0%. When Cr is contained, that is, when the Cr content is more than 0%, the Cr increases the strength of the steel. If even a small amount of Cr is contained, this effect can be obtained to some extent. On the other hand, when the Cr content is 0.30% or less, the hardened layer HL is inhibited from excessively thick. As a result, the railway axle 1 can have a sufficient fatigue limit. Accordingly, the Cr content is set to 0 to 0.30%.
A lower limit of the Cr content is preferably 0.01%, more preferably 0.03%, further preferably 0.06%, and further preferably 0.10%.
An upper limit of the Cr content is preferably 0.28%, more preferably 0.25%, and further preferably 0.20%.

Mo: 0 to 0.10%

Molybdenum (Mo) is an optional element and need not be contained. In other words, the Mo content may be 0%. When Mo is contained, that is, when the Mo content is more than 0%, the Mo increases the strength of the steel. If even a small amount of Mo is contained, the aforementioned effect can be obtained to some extent. However, if the Mo content is more than 0.10%, the aforementioned effect will be saturated. Accordingly, the Mo content is set to 0 to 0.10%.
A lower limit of the Mo content is preferably 0.01%, more preferably 0.02%, further preferably 0.03%, and further preferably 0.04%.
An upper limit of the Mo content is preferably 0.09%, more preferably 0.08%, and further preferably 0.07%.

Cu: 0 to 0.30%

Copper (Cu) is an optional element and need not be contained. In other words, the Cu content may be 0%. When Cu is contained, that is, when the Cu content is more than 0%, the Cu increases the strength of the steel. If even a small amount of Cu is contained, this effect can be obtained to some extent. When the Cu content is 0.30% or less, a sufficient hot workability of the steel can be obtained. Accordingly, the Cu content is set to 0 to 0.30%.
A lower limit of the Cu content is preferably 0.01%, and more preferably 0.02%.
An upper limit of the Cu content is preferably 0.25%, more preferably 0.20%, further preferably 0.15%, further preferably 0.10%, and further preferably 0.05%.

Ni: 0 to 0.30%

Nickel (Ni) is an optional element and need not be contained. In other words, the Ni content may be 0%. When Ni is contained, that is, when the Ni content is more than 0%, the Ni increases the strength of the steel. If even a small amount of Ni is contained, this effect can be obtained to some extent. However, if the Ni content is more than 0.30%, the aforementioned effect will be saturated. Accordingly, the Ni content is set to 0 to 0.30%.
A lower limit of the Ni content is preferably 0.01%, more preferably 0.02%, and further preferably 0.04%.
An upper limit of the Ni content is preferably 0.25%, more preferably less than 0.20%, further preferably 0.15%, and further preferably 0.10%.

[Group 3: Al]

The chemical composition of the base metal portion BM of the railway axle 1 according to the present embodiment may further contain Al in lieu of a part of Fe.

Al: 0 to 0.100%

Aluminum (Al) is an optional element and need not be contained. In other words, the Al content may be 0%. When Al is contained, that is, when the Al content is more than 0%, the Al deoxidizes the steel. Al also combines with N to form AlN, and refines the grains. As a result, the toughness of the steel increases. If even a small amount of Al is contained, these effects can be obtained to some extent. On the other hand, when the Al content is 0.100% or less, the formation of coarse oxide inclusions is suppressed. Thus, the railway axle 1 can have a sufficient fatigue limit. Accordingly, the Al content is 0 to 0.100%.

A lower limit of the Al content is preferably 0.001%, more preferably 0.005%, further preferably 0.007%, further preferably 0.010%, further preferably 0.015%, and further preferably 0.020%.

An upper limit of the Al content is preferably 0.080%, more preferably 0.060%, further preferably 0.050%, further preferably 0.045%, and further preferably 0.040%.

In the present description, the term "Al content" means the content of acid-soluble Al (sol. Al).

[Group 4: V, Ti, and Nb]

The chemical composition of the base metal portion BM of the railway axle 1 according to the present embodiment may further contain one or more types of element selected from the group consisting of V, Ti, and Nb in lieu of a part of Fe. Each of these elements is an optional element, and each element forms precipitates and increases the strength of the steel.

V: 0 to 0.060%

Vanadium (V) is an optional element and need not be contained. In other words, the V content may be 0%. When V is contained, that is, when the V content is more than 0%, the V combines with N or C to form V(C, N). The V(C, N) increases the strength of the steel. The V(C, N) also refines grains, thus increasing the fatigue strength of the steel. If even a small amount of V is contained, these effects can be obtained to some extent. On the other hand, when the V content is 0.060% or less, a sufficient toughness of the steel can be obtained. Accordingly, the V content is set to 0 to 0.060%.

A lower limit of the V content is preferably 0.001%, more preferably 0.005%, further preferably 0.008%, and further preferably 0.010%.

An upper limit of the V content is preferably 0.055%, more preferably 0.050%, further preferably 0.045%, and further preferably 0.040%.

Ti: 0 to 0.020%

Titanium (Ti) is an optional element and need not be contained. In other words, the Ti content may be 0%. When Ti is contained, that is, when the Ti content is more than 0%, Ti combines with N to form fine TiN. The TiN increases the strength of the steel. The TiN also refines grains, thus increasing the fatigue limit of the steel. If even a small amount of Ti is contained, these effects can be obtained to some extent. On the other hand, when the Ti content is 0.020% or less, a sufficient toughness of the steel can be obtained. Accordingly, the Ti content is set to 0 to 0.020%.

A lower limit of the Ti content is preferably 0.001%, more preferably 0.002%, and further preferably 0.003%.

An upper limit of the Ti content is preferably 0.018%, more preferably 0.015%, further preferably 0.013%, further preferably 0.010%, and further preferably 0.007%.

Nb: 0 to 0.030%

Niobium (Nb) is an optional element and need not be contained. In other words, the Nb content may be 0%. When Nb is contained, that is, when the Nb content is more than 0%, Nb combines with N or C to form Nb(C, N). The Nb(C, N) refines grains and increases the strength and toughness of the steel. If even a small amount of Nb is contained, this effect can be obtained to some extent. On the other hand, when the Nb content is 0.030% or less, a sufficient toughness of the steel can be obtained. Accordingly, the Nb content is set to 0 to 0.030%.

A lower limit of the Nb content is preferably 0.001%, more preferably 0.002%, further preferably 0.003%, and further preferably 0.005%.

An upper limit of the Nb content is preferably 0.029%, more preferably 0.027%, further preferably 0.025%, and further preferably 0.020%.

[Group 5: B]

The chemical composition of the base metal portion BM of the railway axle 1 according to the present embodiment may further contain B in lieu of a part of Fe.

B: 0 to 0.0050%

Boron (B) is an optional element and need not be contained. In other words, the B content may be 0%. When Bi is contained, that is, when the B content is more than 0%, the B increases the hardenability of the steel. If even a small amount of B is contained, this effect can be obtained to some extent. On the other hand, when the B content is 0.0050% or less, a sufficient toughness of the steel can be obtained. Accordingly, the B content is set to 0 to 0.0050%.

A lower limit of the B content is preferably 0.0001%, more preferably 0.0003%, further preferably 0.0005%, and further preferably 0.0007%.

An upper limit of the B content is preferably 0.0040%, more preferably 0.0030%, and further preferably 0.0020%.

[Regarding microstructure of base metal portion BM]

Preferably, the microstructure of the base metal portion BM of the railway axle 1 according to the present embodiment is principally composed of ferrite and pearlite structures. In the present description, the phrase "principally composed of ferrite and pearlite structures" means that the total area fraction of ferrite and pearlite in the microstructure is 70% or more. The balance in the microstructure of the base metal portion BM of the railway axle 1 according to the present embodiment is, for example, tempered martensite, bainite, and retained austenite.

Note that the total area fraction of ferrite and pearlite in the microstructure can be determined by the following method. Five samples for observing the microstructure are taken from any position in the base metal portion BM of a cross section perpendicular to the direction of the center axis C1 of the fitting portion 2 or the non-fitting portion 3. A cross section perpendicular to the center axis C1 is used as an observation surface. The observation surface of each sample is polished to a mirror-finished surface, and thereafter is immersed in Nital etching reagent for approximately 10 seconds to reveal the microstructure by etching. The etched observation surface is observed using an optical microscope. One visual field is set to 40000 $\mu m^2$ (magnification of 500x), and one visual field is observed per sample (that is, a total of five visual fields are observed using five samples). In each visual field, ferrite and pearlite are identified based on contrast. The total area fraction of ferrite and pearlite in each visual field is determined based on the total area of the identified ferrite and pearlite, and the area of each visual field (40000 $\mu m^2$). The arithmetic average value of the total area fractions of ferrite and pearlite determined in each visual field is defined as the total area fraction (%) of ferrite and pearlite.

[Regarding hardened layer HL]

In the present description, the term "hardened layer HL" means a region formed by induction hardening in which the Vickers hardness increased in comparison to the base metal portion BM. In the present specification, the hardened layer HL means a region defined as a total case depth from the surface based on JIS G 0559: 2019.

[Method for measuring total case depth]

The total case depth can be measured using the following method in accordance with JIS G 0559:2019. A macrostructure test is carried out in accordance with the same standard.

Specifically, a test piece having a cross section perpendicular to the axial direction of the railway axle 1 is taken at a 0.23Rf position in the axial direction of the railway axle 1 from the R end 32E of the fillet R portion 32 toward the parallel portion 31 side, the R end 32E being the end that is in contact with the parallel portion 31. The cross section of the test piece is used as a measurement surface. The position of the measurement surface in the railway axle 1 is the 0.23Rf position in the axial direction of the railway axle 1 from the R end 32E of the fillet R portion 32 toward the parallel portion 31 side, the R end 32E being the end that is in contact with the parallel portion 31. Four test pieces are taken at 90° intervals around the center axis C1 of the railway axle 1. All of the test pieces each have a measurement surface at the 0.23Rf position. The size of the measurement surface is such that the radial length of the railway axle 1 is 20 mm and the length perpendicular to the radial length (approximately the circumferential length) is 15 mm. Note that one side of the measurement surface corresponds to an outer circumferential surface of the parallel portion 31 of the railway axle 1. Therefore, the one side is slightly curved. The curved one side is referred to as a "curved side". Further, these four test pieces are referred to as "0.23Rf position test pieces".

Similarly, a test piece having a cross section perpendicular to the axial direction of the railway axle 1 is taken at a 0.57Rf position in the axial direction of the railway axle 1 from the R end 32E of the fillet R portion 32 toward the parallel portion 31 side, the R end 32E being the end that is in contact with the parallel portion 31. The cross section of the test piece is used as a measurement surface. The position of the measurement surface in the railway axle 1 is the 0.57Rf position in the axial direction of the railway axle 1 from the R end 32E of the fillet R portion 32 toward the parallel portion 31 side, the R end 32E being the end that is in contact with the parallel portion 31. Four test pieces are taken at 90° intervals around the center axis C1 of the railway axle 1. All of the test pieces each have a measurement surface at the 0.57Rf position. The size of the measurement surface is such that the radial length of the railway axle 1 is 20 mm and the length perpendicular to the radial length (approximately the circumferential length) is 15 mm. Note that one side of the measurement surface corresponds to an outer circumferential surface of the parallel portion 31 of the railway axle 1. Therefore, the one side is slightly curved. The curved one side is referred to as a "curved side". Further, these four test pieces are referred to as "0.57Rf position test pieces".

The measurement surface of each test piece is immersed in Nital etching reagent for approximately 10 seconds to reveal the microstructure by etching. On the etched measurement surface, the interface between the hardened layer HL and the base metal portion BM can be clearly confirmed. On the measurement surface, the distance from the surface of the hardened layer HL (the center position of the curved side) to the interface (the radial distance of the railway axle 1) is defined as the total case depth (mm).

The arithmetic average value of four total case depths measured on the measurement surfaces of the four 0.23Rf position test pieces is defined as the total case depth (mm) at the 0.23Rf position.

The arithmetic average value of four total case depths measured on the measurement surfaces of the four 0.57Rf position test pieces is defined as the total case depth (mm) at the 0.57Rf position.

[Regarding microstructure of hardened layer HL]

Preferably, the microstructure of the hardened layer HL is principally composed of martensite and bainite. The microstructure of the hardened layer HL is well known. In a region from the surface of the hardened layer HL to a depth equal to half the total case depth thereof, the total area fraction of martensite and bainite is 80% or more.

The microstructure in a region from the surface of the hardened layer HL to a depth equal to half the total case depth can be observed using the following method. Five test pieces that include at least a region with the total case depth are taken from the surface of the hardened layer HL. On the surface of each test piece, a cross section perpendicular to the center axis C1 is used as an observation surface. The observation surface of each sample is polished to a mirror-finished surface, and thereafter is immersed in Nital etching reagent for approximately 10 seconds to reveal the microstructure by etching. On the etched measurement surface, the interface between the hardened layer HL and the base metal portion BM can be clearly confirmed.

On the observation surface of each test piece, a rectangular observation visual field ($200\ \mu m \times 200\ \mu m$) with a visual field area of 40000 $\mu m^2$ and centered at a depth position of 1/2 of the total case depth from the surface of the hardened layer HL is observed using an optical microscope at a magnification of 500x.

In each observation visual field, martensite and bainite, and phases other than martensite and bainite (ferrite and the like) are identified based on contrast. It is difficult to distinguish between martensite and bainite based on contrast. However, martensite and bainite are easily distinguishable from structures other than martensite and bainite (ferrite, pearlite, and austenite) based on contrast. The total area fraction of martensite and bainite in each observation visual field is determined based on the total area of the identified martensite and bainite, and the area of each observation visual field (40000 $\mu m^2$). The arithmetic average value of the total area fractions of martensite and bainite determined in the five observation visual fields is defined as the total area fraction (%) of martensite and bainite.

Although the microstructure of the hardened layer HL is different from the microstructure of the base metal portion BM, the chemical composition of the hardened layer HL is the same as the aforementioned chemical composition of the base metal portion BM. That is, the hardened layer HL has the chemical composition described in Feature 1.

[Regarding Feature 2: DW/DA]

DW/DA, which is the ratio of the diameter DW of the fitting portion 2 to the diameter DA of the parallel portion 31, is 1.10 to 1.30 in the railway axle 1 according to the present embodiment.

As described above, fretting fatigue is likely to occur in the fitting portion 2. It is conceivable that fretting fatigue is caused by slight slippage that occurs repeatedly due to contact between the fitting portion 2 and the railway wheel 1 as a result of a bending moment being applied to the railway axle 1. When a bending moment is applied, stress applied to the surfaces of the fitting portion 2 changes depending on DW/DA. Specifically, when DW/DA is large, the bending stress on the surface of the fitting portion 2 is easily alleviated. Therefore, fretting fatigue in the fitting portion 2 can be suppressed by increasing DW/DA. That is, the fatigue limit in the fitting portion 2 is increased by increasing DW/DA.

In view of this, in the present embodiment, DW/DA is set to 1.10 or more. In this case, the fatigue limit in the fitting portion 2 is sufficiently increased, and fretting fatigue is suppressed. On the other hand, when the diameter ratio DW/DA is excessively large, heating and cooling applied from the non-fitting portion 3 to the fitting portion 2 during induction hardening in the production process described below will be non-uniform. As a result, there are cases where a portion of the fitting portion 2 becomes coarse grained, and the hardened layer HL of the fitting portion 2 becomes extremely thin. Therefore, DW/DA is 1.10 to 1.30 in the railway axle 1 according to the present embodiment.

A lower limit of the DW/DA is preferably 1.11, more preferably 1.12, further preferably 1.13, and further preferably 1.14.

An upper limit of the DW/DA is preferably 1.25, more preferably 1.22, further preferably 1.20, further preferably 1.19, and further preferably 1.18.

[Regarding Feature 3: radius of curvature Rf of fillet R portion 32]

Furthermore, in the railway axle 1 according to the present embodiment, with a reference total case depth $C_{AT}$ mm being the smaller depth out of the total case depths at a 0.23Rf position and a 0.57Rf position in the axial direction of the railway axle 1 from the R end 32E of the surface of the fillet R portion 32 toward the parallel portion 31 side, the R end 32E being the end that is in contact with the surface of the parallel portion 31, the radius of curvature Rf is greater than or equal to the critical radius of curvature Rcr mm defined by Formula (1) and smaller than or equal to 60.0 mm.

[Expression 4]

$$\mathrm{Rcr} = 0.0822\mathrm{DA} \cdot \exp\left(\frac{8.38 C_{AT}}{\mathrm{DA}}\right) \ \ (1)$$

Here, when the fillet R portion 32 has multiple radii of curvature, the radius of curvature Rf of a portion adjacent to the surface of the parallel portion 31 means the radius of curvature (mm) within a range of 1/4 of the length of the fillet R portion from a contact point at the end of the parallel portion 31 toward the axial direction of the fillet R portion.

In the railway axle 1 of the present embodiment, on the surface of the fillet R portion 32 in a cross section including the center axis C1 of the railway axle 1, the radius of curvature Rf of the portion adjacent to the surface of the parallel portion 31 satisfies the above range, and thus, the fatigue limit of the fitting portion 2 can be increased while maintaining a sufficient fatigue limit for the non-fitting portion 3. Hereinafter, this point will be described.

[Examinations of fatigue limit in fitting portion 2]

As described above, fretting fatigue occurs in the fitting portion 2. Therefore, the fitting portion 2 has a fatigue limit related to breakage and a fatigue limit related to the formation of cracks due to fretting. Even when stress that is less than the fatigue limit related to breakage is applied to the fitting portion 2, if the applied stress exceeds the fatigue limit related to crack formation, fretting fatigue will occur. However, as the fatigue limit related to breakage increases, the fatigue limit related to crack formation also increases. Therefore, the formation of cracks due to fretting can also be suppressed by increasing the fatigue limit related to breakage of the fitting portion 2. As described above, it is preferable to increase the fatigue limit related to breakage in the fitting portion 2 as much as possible.

[Examinations of fatigue limit in no-fitting portion 3]

In order to increase the fatigue limit of the fitting portion 2 while ensuring a sufficient fatigue limit in the non-fitting portion 3, the inventors of the present invention first conducted the following fatigue test on the railway axle 1 having a chemical composition that satisfies Feature 1 to investigate the fatigue limit in the non-fitting portion 3.

Specifically, a test axle, which met the chemical composition of Feature 1 and had undergone induction hardening, was prepared. In order to fracture the non-fitting portion 3 of the test axle, the diameter DW of the fitting portion 2 was set to 169 mm and the diameter DA of the parallel portion 31 of the non-fitting portion 3 was set to 130 mm to satisfy DW/DA = 1.30. That is, a step height between the fitting portion 2 and the non-fitting portion 3 was increased. The total case depth at the R end 32E of the test axle was 7.7 mm, and the depth of the hardened layer at the parallel portion 31 was 10.7 mm.

The fatigue tests that were conducted included a fatigue test, in which a rotary bending load mode in which loads with a 90° phase difference were repeatedly applied using an electro-hydraulic servo fatigue testing machine equipped with two orthogonal axis actuators, and a bending fatigue test, which was performed using an ordinary single-axis electro-hydraulic servo fatigue testing machine. A strain gauge was attached from the fillet R portion 32 to the parallel portion 31 of the test axle, and a static bending load was applied before the fatigue test to measure stress (axial stress distribution on the surface of the test axle). The stress on the surface directly above the position where the formation of the crack started in the fatigue test was determined based on the relationship between the obtained stress distribution and the test force, and the determined stress was used as representative stress. In the fatigue tests, the stress ratio applied to the test axle was -1, and the test frequency was 1 Hz. The test environment was room temperature in air, and the fatigue test was terminated when no macrocracks were observed after $10^7$ test cycles. Here, a "macrocrack" is a crack that have a total length of 10 mm or more, which is revealed through visual observation.

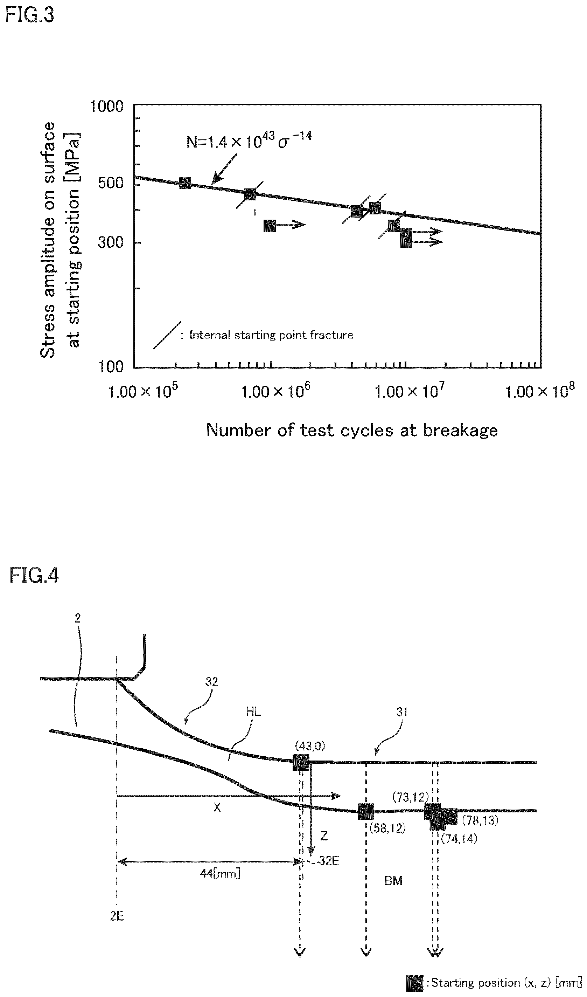

In the above fatigue test, in a region extending from the fillet R portion 32 of the non-fitting portion 3 to the parallel portion 31, a macrocrack with a size of several tens of millimeters was formed in the surface of the test axle. FIG. 3 is an S-N diagram based on representative stress. The fatigue limit of the test axle under the representative stress was 338 MPa. The average of the representative stress under conditions in which a macrocrack was formed with the longest service life in the fatigue test performed, and the representative stress under conditions in which no macrocracks were observed after $10^7$ test cycles was used as the fatigue limit under representative stress (338 MPa). Here, the latter representative stress under the conditions in which no macrocracks were observed is the stress at the surface position directly above the starting point at which the representative stress was determined under the aforementioned macrocrack formation condition, and corresponds to the higher stress at two points plotted with arrows at the positions where $10^7$ test cycles were performed in FIG. 3.

As for the test axles in which a macrocrack was confirmed in the fatigue test, the crack starting position was confirmed by performing fracture surface preparation. FIG. 4 illustrates a crack starting position in a cross section including the center axis of the test axle. As a result of tests performed on a plurality of test axles, in one test axle, a crack at a surface initiating point (starting position) in the vicinity of the R end 32E of the fillet R portion 32 was confirmed. In addition, in four test axles, cracks at internal initiating points (starting positions) of the base metal portion BM at a depth of 12 to 14 mm from the surface of the parallel portion 31 were confirmed. Referring to FIGS. 3 and 4, in the S-N curve plot in FIG. 3, plots of internal initiating points are marked with "/". Referring to FIGS. 3 and 4, cracks at the surface initiating points were formed at high stress and a shorter service life, and cracks at the internal initiating points were formed at low stress and a longer service life.

The above test results suggest that the fatigue limit of the non-fitting portion 3 of the railway axle 1 is determined by the magnitude relationship between load stress and the fatigue limit at the R end 32E or fatigue limit inside the parallel portion 31. As a result of further examinations, it was revealed that the depth position of the internal initiating point corresponds to the total case depth of the hardened layer HL, i.e., the internal quenching boundary position. Further, the position in the axial direction of the test axle at the internal initiating point was 14 to 34 mm from the R end 32E. When the position in the axial direction at the internal initiating point is expressed using the radius of curvature Rf of the fillet R portion 32, the position is 0.23Rf to 0.57Rf mm.

Considering the above, when a crack forms in the non-fitting portion 3 of the railway axle 1 that satisfies the chemical composition of Feature 1, the crack does not necessarily form at the surface initiating point in the vicinity of the R end 32E, but the crack forms at either the surface initiating point in the vicinity of the R end 32E, or an internal initiating point corresponding to the internal quenching boundary position of the hardened layer HL in a range of 0.23Rf to 0.57Rf in the axial direction from the R end 32E toward the parallel portion 31 side.

Here, the fatigue limit (338 MPa) obtained in the aforementioned fatigue test is the surface stress directly above the corresponding internal initiating point. Specifically, the fatigue limit (338 MPa) of the test axle is determined from the lowest surface stress among five starting positions obtained (one surface initiating point and four internal initiating points).

Referring to FIG. 3, the fatigue limit at the internal initiating position is inversely proportional to the ratio of the depth of the internal initiating point to the radius (DA/2) of the parallel portion 31 with respect to the surface stress (fatigue limit). Therefore, in FIG. 4, the fatigue limit of 338 MPa is indicated at the internal initiating point (74, 14) in the xz coordinate system. Therefore, the fatigue limit at the internal initiating point where the surface stress is 338 MPa is 275 MPa. As described above, it is conceivable that the fatigue limit when a crack forms at the internal initiating point in the parallel portion 31 is at least 275 MPa.

On the other hand, the representative stress (minimum breaking stress) when the crack formed at the surface initiating point in the vicinity of the R end 32E was 501 MPa, and the number of test cycles at breakage was $2.32 \times 10^5$. In general, in an S-N diagram in which internal initiating point fracture and surface initiating point fracture coexist, the number of test cycles at breakage at a bending point of the S-N curve for the surface initiating point fracture is about $1.00 \times 10^5$ test cycles. Therefore, based on the number of test cycles at breakage, it is conceivable that the representative stress (minimum breaking stress) at the surface initiating point obtained in this fatigue test is close to the fatigue limit. Further, when breakage has occurred at the internal initiating point, which exhibits a longer service life than that at the surface initiating point, no crack will form at the surface at least until the breakage service life. On the surface, the highest stress occurs in the vicinity of the R end 32E of the fillet R portion 32. In view of this, considering that no cracks formed even at this stress, the maximum stress on the surface of the fillet R portion 32 (i.e., the maximum stress in the vicinity of the R end 32E) is used when the fatigue limit at the surface initiating point is determined. In view of this, in the present embodiment, the arithmetic average value of 501 MPa, which is the representative stress (minimum breaking stress) when a crack forms at the surface initiating point, and the maximum stress (494 MPa) on the surface of the fillet R portion 32 when the longer service life than that at the surface initiating point was realized, was 498 MPa. As described above, it is conceivable that the fatigue limit when a crack forms at the surface initiating point in the vicinity of the R end 32E is at least 498 MPa.

Based on the above experimental results, in the railway axle 1 having a chemical composition that satisfies Feature 1, it is presumed that the fatigue limit at the surface initiating point (vicinity of the R end 32E) of the non-fitting portion 3 is 498 MPa, and the fatigue limit at the internal initiating point (internal quenching boundary position) is 275 MPa.

[Relationship between shape of vicinity of fitting portion 2 and fatigue limit of fitting portion 2]

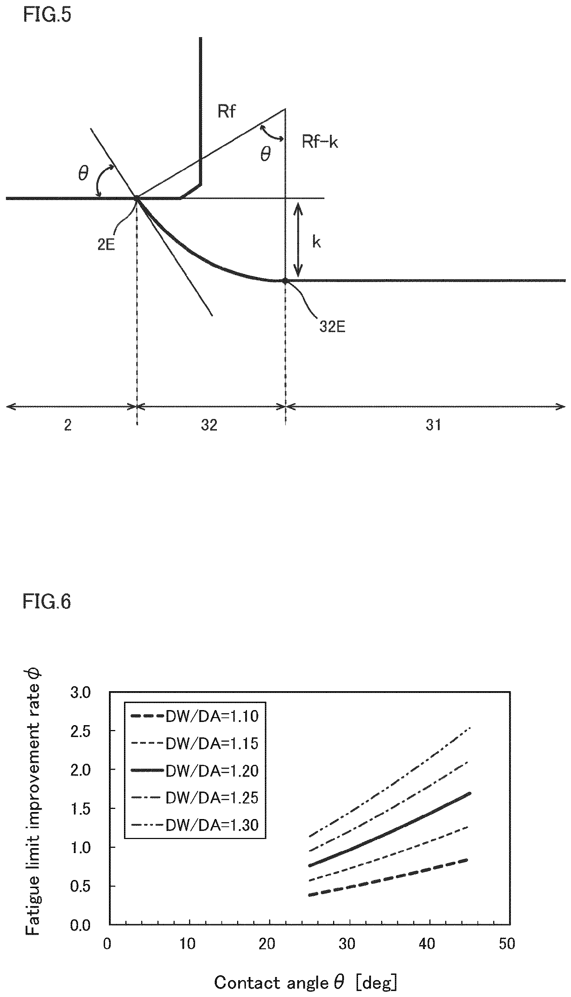

Next, a relationship between the shape of the vicinity of the fitting portion 2 and the fatigue limit of the fitting portion 2 is examined. FIG. 5 is an enlarged view of the vicinity of the fitting portion 2 of the railway axle 1 shown in FIG. 1. Referring to FIG. 5, the fatigue strength of the fitting portion 2 can be increased by increasing a step height k (mm) between the fitting portion 2 and the parallel portion 31, or by increasing a fitting contact angle θ (°) at the wheel seat end 2E, which is the boundary between the fitting portion 2 and the fillet R portion 32. As illustrated in FIG. 5, the fitting contact angle θ refers to the angle (°) between the tangent to the surface of the fillet R portion 32 at the wheel seat end 2E and the axial direction of the railway axle 1 in a cross section of the railway axle 1 including the center axis.

FIG. 6 is a diagram illustrating a relationship between the fitting contact angle θ and a fatigue limit improvement rate ø of the fitting portion 2 when DW/DA was changed. Here, the fatigue limit improvement rate refers to a value obtained by subtracting 1.0 from the ratio of the fatigue limit to the fatigue limit of the fitting portion at the railway axle with DW/DA = 1.00 (i.e., a railway axle with no step height). As illustrated in FIG. 6, the larger DW/DA (that is, the larger the step height k) is and the larger the fitting contact angle θ is, the higher the fatigue limit of the fitting portion 2 is. Here, the relationship between the radius of curvature Rf of the fillet R portion 32 and the fitting contact angle θ can be geometrically expressed by the following formula.

[Expression 5]

$$\theta = \cos^{-1} \frac{Rf-k}{Rf}$$

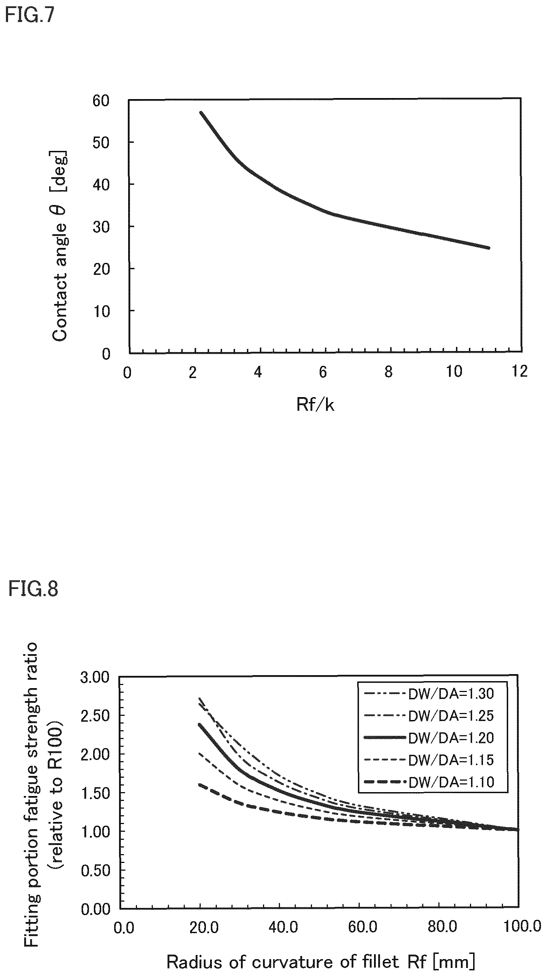

In the above formula, k = (DW - DA)/2 holds true. FIG. 7 is a diagram illustrating a relationship between Rf/k and the fitting contact angle θ determined by the above formula. Referring to FIG. 7, when the step height k is constant, the larger Rf is, the smaller the fitting contact angle θ is. Note that it is presumed that the surface of the fillet R portion 32 has a single radius of curvature Rf in the above description, but the above formula can also be applied to the case where the surface of the fillet R portion 32 has a plurality of radii of curvature. Specifically, when the fillet R portion 32 has a plurality of radii of curvature, on the surface of the fillet R portion 32, the radius of curvature of a portion adjacent to the fitting portion 2 is smaller than the radius of curvature Rf of a portion adjacent to the surface of the parallel portion 31. Therefore, the fitting contact angle θ in this case is larger than that determined by the formula using the radius of curvature Rf. If the fitting contact angle θ is large, the fatigue limit of the fitting portion 2 increases. In light of the above, even if the surface of the fillet R portion 32 has multiple radii of curvature, examination of the fitting contact angle θ using the radius of curvature Rf leads to evaluation taking safety into consideration and therefore obtain appropriate evaluation.

Combining the relationship between FIGS. 6 and 7 results in the chart illustrated in FIG. 8. In FIG. 8, the fatigue limit of the fitting portion is normalized as the ratio (the fitting portion fatigue limit ratio) to the fatigue limit of the fitting portion of a conventional railway axle with the radius of curvature Rf = 100 mm. Referring to FIG. 8, when no cracks form at the non-fitting portion 3 under repeated load stress applied to the railway axle 1, the fitting portion fatigue limit ratio is 1.11 to 1.28 times when DW/DA is 1.10 to 1.30 and the radius of curvature Rf is 60.0 mm. Further, as illustrated in FIG. 8, when the radius of curvature Rf is 60.0 mm or less, the fitting portion fatigue limit ratio is further increased. Therefore, when the upper limit of the radius of curvature Rf is set to 60.0 mm, the fitting portion 2 can have a superior fatigue limit, compared to a conventional railway axle with the radius of curvature of about 100 mm.

[Stress concentration at R end 32E of non-fitting portion 3]

As described above, in the present embodiment, in order to increase the fatigue limit of the fitting portion 2 when no cracks form at the non-fitting portion 3, the radius of curvature Rf of the fillet R portion 32 is set to 60.0 mm or less. However, as described above, the smaller the radius of curvature Rf is, the greater the stress concentration at the R end 32E is. The load stress applied to the surface initiating point of the R end 32E is expressed as the stress concentration factor × the nominal stress. Therefore, if the stress concentration increases, the stress applied to the R end 32E increases and exceeds the breaking stress (498 MPa). In this case, the non-fitting portion 3 cannot have a sufficient fatigue limit.

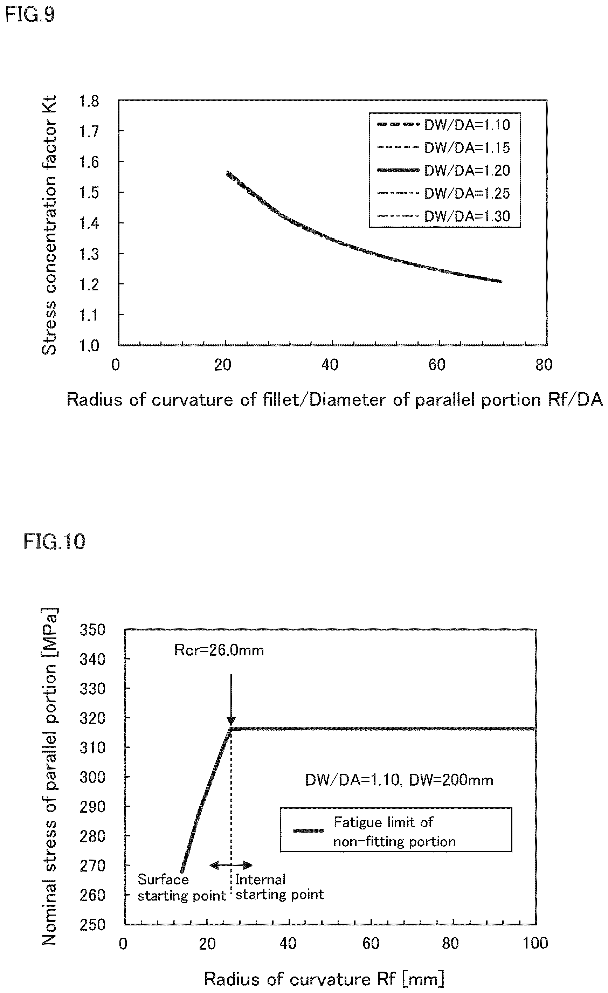

In view of this, the effects of the radius of curvature Rf and DW/DA on the stress concentration factor at the R end 32E were evaluated through FEM analysis. In the FEM analysis, the product name "Abaqus", which is general-purpose software provided by Dassault Systèmes, was used. A finite element division was created using axisymmetric Fourier elements, and the element size near the R end was set to Rf/10 or less. Input physical properties were set such that Young's modulus was 205.8 GPa and Poisson's ratio was 0.3, and an elastic analysis was performed. The results obtained are shown in FIG. 9. Referring to FIG. 9, the stress concentration factor Kt exhibits a negative correlation with Rf/DA, which is obtained by dividing the radius of curvature by the diameter of the parallel portion. On the other hand, the stress concentration factor Kt is substantially independent of DW/DA.

[Regarding lower limit of radius of curvature Rf]

As described above, the stress concentration factor Kt of the R end 32E of the non-fitting portion 3 is increased by reducing the radius of curvature Rf. Thus, the stress applied to the surface initiating point of the R end 32E increases, and can exceed the fatigue limit (498 MPa) of the surface initiating point. In view of this, the lower limit of the radius of curvature Rf is specified as follows.

As described above, in the non-fitting portion 3, the fatigue limit at the internal initiating point (internal quenching boundary position) was 275 MPa, and the fatigue limit at the surface initiating point was 498 MPa. Thus, as a result of reducing the radius of curvature Rf in order to increase the fatigue limit of the fitting portion 2, even if the stress concentration factor Kt at the R end 32E increases and the stress at the R end 32E increases, unless the stress exceeds 498 MPa, a crack forms at the internal initiating point (internal quenching boundary position) in the non-fitting portion 3. Therefore, the fatigue limit at the non-fitting portion 3 does not change and is constant. This is because the stress concentration occurring at the fillet R portion 32 has no effect on the internal initiating point, and stress resulting from the stress concentration does not increase.

In view of this, the relationship between Rf/DA and the fatigue limit of the non-fitting portion 3 caused by the nominal stress of the parallel portion 31 was determined using the aforementioned fatigue test results and the relationship between the stress concentration factor Kt and Rf/DA illustrated in FIG. 9. An example of the results obtained are shown in FIG. 10. FIG. 10 is an example in which DW/DA = 1.10, DW = 200 mm, and the total case depth of the hardened layer, that is, the depth at the internal initiating point (the depth at the internal quenching boundary position) $C_{AT}$ = 12.0 mm. In this case, when the radius of curvature Rf is greater than or equal to the critical radius of curvature Rcr = 26.0 mm in FIG. 10, the crack formation starting point is the internal initiating point, and the fatigue limit at the non-fitting portion 3 becomes constant. On the other hand, if the radius of curvature Rf is less than the critical radius of curvature Rcr, the fatigue limit of the non-fitting portion 3 decreases. In this case, it means that the crack formation starting point is the surface initiating point, and will be significantly affected by the stress concentration factor Kt.

Specifically, the critical radius of curvature Rcr is the radius of curvature Rf at which the stress at the position of the total case depth $C_{AT}$ of the hardened layer of the parallel portion 31 (i.e., the internal initiating point) is 275 MPa, and the stress at the R end 32E (i.e., the surface initiating point) is 498 MPa. When the lower limit of the radius of curvature Rf is the critical radius of curvature Rcr, the fatigue limit of the non-fitting portion 3 at the nominal stress can be the maximum value (that is, the fatigue limit at the internal initiating point).

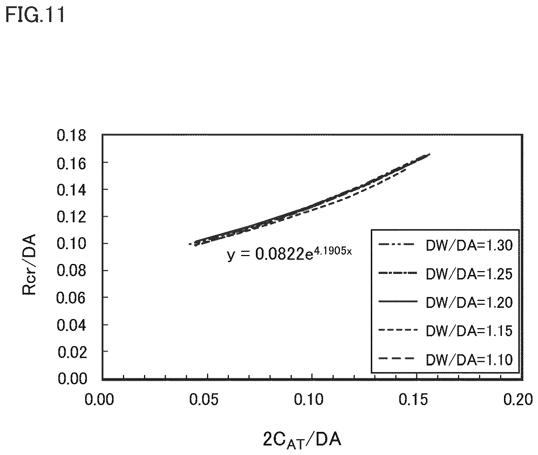

As in FIG. 10, the critical radius of curvature Rcr was determined by varying the conditions under which DW/DA was 1.10 to 1.30 and the total case depth $C_{AT}$ of the hardened layer of the parallel portion 31 was in a range of 4.0 to 12.0 mm. The relationship between Rcr/DA, which is obtained by dividing the determined critical radius of curvature by the diameter of the parallel portion, and $2C_{AT}$/DA is illustrated in FIG. 11. Here, $2C_{AT}$/DA is the ratio of the total case depth $C_{AT}$ to the radius (DA/2) of the parallel portion 31. Referring to FIG. 11, when DW/DA is in a range of 1.10 to 1.30, the critical radius of curvature Rcr is hardly affected by DW/DA. In FIG. 11, the Rcr/DA curve for $2C_{AT}$/DA is approximated as shown in Formula (1).

[Expression 6]

$$\text{Rcr} = 0.0822\text{DA} \cdot \exp\left(\frac{8.38C_{AT}}{\text{DA}}\right) \quad (1)$$

Thus, in the railway axle 1 that satisfies Features 1 and 2, when the radius of curvature Rf of the fillet R portion 32 is Rcr mm or more and 60.0 mm or less, the fatigue limit of the non-fitting portion 3 at the nominal stress is the maximum value. Thus, the fatigue limit of the fitting portion 2 can be increased while maintaining the fatigue limit for the non-fitting portion 3.

A lower limit of the radius of curvature Rf is preferably 1.05Rcr mm, more preferably 1.10Rcr mm, and further preferably 1.15Rcr mm.

An upper limit of the radius of curvature Rf is preferably 58.0 mm, more preferably 55.0 mm, and further preferably 52.0 mm.

Note that Rcr is a value obtained by rounding off the value obtained using Formula (1) to the first decimal place.

Note that in the present embodiment, the 0.23Rf position and the 0.57Rf position in the axial direction of the railway axle 1 from the R end 32E toward the parallel portion 31 side correspond to the internal initiating points, and the fatigue limit is approximately constant. Therefore, the total case depths at the 0.23Rf position and the 0.57Rf position are approximately the same value, but in the present embodiment, the smaller value is set as a reference total case depth $C_{AT}$. The reason for this definition is that if the total case depth changes from the 0.23Rf position to the 0.57Rf position, the position at which the total case depth is smaller will be the internal initiating point and the fatigue limit will be affected.

As described above, the railway axle 1 of the present embodiment satisfies Features 1 to 3. Therefore, the non-fitting portion can have a sufficient fatigue limit and the fatigue limit of the fitting portion can be increased.

[Production method]

One example of a method for producing the railway axle according to the present embodiment will now be described.

Molten steel having a chemical composition that satisfies Feature 1 is produced. An ingot is produced using the molten steel. Hot forging is performed on the ingot to produce a crude product having the shape of an axle. It suffices that the heating temperature at which the ingot is heated during hot forging falls within a well-known temperature range. The heating temperature may be set to 1000°C to 1300°C, for example. The produced crude product is subjected to quenching and tempering, or a normalizing treatment.

In the case of performing quenching and tempering, it suffices that the upper limits adopted for the quenching and tempering are well-known conditions. Specifically, in the quenching, the quenching temperature is set to the $A_{c3}$ transformation point or more and 1000°C or less. The crude product is held at the quenching temperature, and thereafter is rapidly cooled by water cooling or oil cooling. In the tempering, the tempering temperature is set to the $A_{c1}$ transformation point or less. The tempering temperature may be set to 500°C to 700°C, for example. The crude product is held at the tempering temperature, and thereafter is allowed to cool. In the case of performing a normalizing treatment, the crude product is held at a heat treatment temperature that is higher than the $A_{c1}$ transformation point, and thereafter is allowed to cool. Note that tempering may be performed following the normalizing treatment.

The crude product that underwent the quenching and tempering, or the normalizing treatment is, as necessary, subjected to machining. Thereafter, the crude product is subjected to an induction hardening treatment and tempering.

[Regarding induction hardening treatment]

In the induction hardening treatment, a surface layer portion of the crude product is heated to a temperature higher than the $A_{c3}$ transformation point by high-frequency heating, and thereafter is cooled. The quenching temperature during induction hardening may be set to, for example, the $A_{c3}$ transformation point to 1100°C. In this case, the surface layer portion of the crude product transforms from austenite to martensite or bainite. As a result, a hardened layer is formed in the surface layer portion of the crude product.

The induction hardening treatment can be performed using a well-known high-frequency heating apparatus and a well-known cooling apparatus. For example, an annular high-frequency heating apparatus may be used as the high-frequency heating apparatus, and an annular cooling apparatus may be used as the cooling apparatus. In this case, by the center axis C1 of the railway axle 1 and the annular high-frequency heating apparatus and the annular cooling apparatus being arranged coaxially, an induction hardening treatment can be efficiently performed on the surface of each fitting portion 2 and the non-fitting portion 3 of the railway axle 1.

In the induction hardening treatment according to the present embodiment, the high-frequency heating is not particularly limited provided that the surface layer portion of the crude product can be heated to the $A_{c3}$ transformation point or more. In other words, in the present embodiment, it suffices to perform well-known high-frequency heating as the high-frequency heating.

After an induction hardening treatment is performed, tempering may also be performed. In other words, tempering is an optional treatment. For example, in the tempering process, the tempering temperature is set to 150°C to 250°C, and the holding time at the tempering temperature is set to 30 to 150 minutes. After holding, the railway axle was allowed to cool.

The crude product already subjected to the induction hardening treatment may, as necessary, be subjected to final machining. At that time, machining (turning and polishing) is performed on the railway axle 1 to satisfy Features 2 and 3. The railway axle 1 according to the present embodiment is produced by the above-described processes.

Hereinafter, advantageous effects of the railway axle 1 of the present embodiment will be described more specifically by way of examples. The conditions adopted in the following examples are one example of conditions adopted for confirming the feasibility and advantageous effects of the railway axle 1 of the present embodiment. Accordingly, the railway axle 1 of the present embodiment is not limited to the following one example of conditions.

EXAMPLES

A plurality of railway axles having different radii of curvature of the fillet R portion were manufactured, and the fatigue limits of the fitting portions and the fatigue limit of the non-fitting portion were determined using the following method.

Railway axles having chemical compositions shown in Table 1 (Tables 1A and 1B) were produced using the following production methods.

[Table 1A]

| Steel material number | Chemical composition (Unit: mass%, balance: Fe and impurities) | | | | | | | |
|---|---|---|---|---|---|---|---|---|
| | C | Si | Mn | P | S | N | O | Ca |
| 1 | 0.40 | 0.27 | 0.77 | 0.008 | 0.0070 | 0.0023 | 0.0011 | - |
| 2 | 0.39 | 0.28 | 0.79 | 0.010 | 0.0080 | 0.0033 | 0.0019 | - |
| 3 | 0.37 | 0.13 | 1.12 | 0.007 | 0.0100 | 0.0045 | 0.0012 | 0.0008 |
| 4 | 0.36 | 0.47 | 0.63 | 0.008 | 0.0060 | 0.0042 | 0.0025 | - |
| 5 | 0.38 | 0.35 | 0.81 | 0.009 | 0.0110 | 0.0033 | 0.0021 | - |
| 6 | 0.37 | 0.28 | 0.75 | 0.009 | 0.0120 | 0.0028 | 0.0018 | - |
| 7 | 0.39 | 0.25 | 0.81 | 0.005 | 0.0090 | 0.0029 | 0.0026 | - |
| 8 | 0.40 | 0.28 | 0.79 | 0.011 | 0.0100 | 0.0038 | 0.0019 | - |
| 9 | 0.31 | 0.46 | 1.15 | 0.013 | 0.0070 | 0.0034 | 0.0012 | - |
| 10 | 0.37 | 0.25 | 0.80 | 0.010 | 0.0090 | 0.0041 | 0.0017 | - |
| 11 | 0.41 | 0.47 | 0.49 | 0.009 | 0.0060 | 0.0163 | 0.0012 | - |
| 12 | 0.40 | 0.26 | 0.82 | 0.007 | 0.0090 | 0.0042 | 0.0024 | - |

[Table 1B]

| Steel material number | Chemical composition (Unit: mass%, balance: Fe and impurities) | | | | | | | | |
|---|---|---|---|---|---|---|---|---|---|
| | Cr | Mo | Cu | Ni | Al | V | Ti | Nb | B |
| 1 | 0.09 | 0.02 | 0.02 | 0.05 | 0.022 | - | 0.007 | - | - |
| 2 | - | - | - | - | - | - | - | - | - |
| 3 | - | - | - | - | - | - | - | - | - |
| 4 | 0.22 | - | - | - | - | - | - | - | - |
| 5 | - | 0.07 | - | - | - | - | - | - | - |
| 6 | - | - | 0.22 | 0.12 | - | - | - | - | - |
| 7 | - | - | - | 0.28 | - | - | - | - | - |
| 8 | - | - | - | - | 0.067 | - | - | - | - |
| 9 | - | - | - | - | - | 0.051 | - | - | - |
| 10 | - | - | - | - | - | - | 0.017 | - | - |
| 11 | - | - | - | - | - | - | - | 0.023 | - |
| 12 | - | - | - | - | - | - | - | - | 0.0023 |

The symbol "-" in Table 1 means that the content of the corresponding element is at an impurity level. Specifically, the symbol "-" indicating each of the Cr, Mo, Cu, and Ni contents means that the content of each element is less than 0.01%. The symbol "-" indicating each of the Al, V, Ti, and Nb contents means that the content of each element is less than 0.001%. The symbol "-" indicating each of the B and Ca contents means that the content of each element is less than 0.0001%.

An ingot was produced using the molten steel. After heating each ingot to 1250°C, hot forging was performed to produce a crude product having an axle shape. The crude product included two fitting portions 2, and a non-fitting portion 3 between the two fitting portions 2.

The crude product of each test sample was subjected to quenching and tempering. The heat treatment temperature during quenching was set to 890°C which is higher than the $A_{c3}$ transformation point of the steel of each test sample. The crude product was held at the heat treatment temperature, and thereafter was subjected to oil quenching. The crude product of each test sample after quenching was subjected to tempering. Regarding the tempering conditions, each crude product was held at a tempering temperature of 640°C for 120 minutes, and thereafter was allowed to cool until the normal temperature was reached. After being allowed to cool, the crude product was roughly machined to dimensions that were several millimeters larger than the DW and DA of each test sample shown in Table 2 below.

The crude product of each test sample after rough machining was subjected to an induction hardening treatment. By performing induction hardening treatment, in the crude product of each test sample, as shown in FIGS. 1 and 2, the hardened layer HL was formed in a range from the vicinity of the wheel seat end 2E of the fitting portion 2 to the vicinity of the wheel seat end 2E of the fitting portion 2 on the opposite side, including the non-fitting portion 3 (the parallel portion 31 and the fillet R portions 32 on both sides).

The hardened layer depth was formed by adjusting the output of the high-frequency heating apparatus such that the depth was approximately the same in a region where the aforementioned hardened layer HL was formed. The quenching temperature during induction hardening was set to the $A_{c3}$ transformation point or more of the steel of each test sample. The crude product that had undergone induction hardening was subjected to tempering. In the tempering process, the entire crude product of each test sample was held at 200°C for 120 minutes. After the crude product was held, the crude product was allowed to cool until the normal temperature was reached.

The crude product that was allowed to cool was subjected to finish machining to adjust the radius DA (mm) of the parallel portion 31, the radius DW (mm) of the fitting portion 2, and the radius of curvature Rf of the fillet R portion 32 as shown in Table 2. A railway axle of each test sample (referred to as a "test axle" hereinafter) was produced by the above production process.

[Evaluation tests]

The following fatigue tests and reference total case depth $C_{AT}$ measurement tests were performed on the test axle of each test sample produced.

[Fatigue test]

A wheel jig was press-fitted on a wheel seat of the fitting portion 2 on one side of the test axle of each test sample. Fatigue tests were conducted using a resonance type fatigue tester on the test axle into which a wheel jig was press-fitted. The fatigue tests include a fatigue test in which a motor provided with an eccentric mass was attached to an end portion opposite to the side of the test wheel on which the wheel jig was press-fitted, and the eccentric mass was rotated to resonate the test axle and perform a rotary bending load mode, and a bending fatigue test performed using an ordinary single-axis electro-hydraulic servo fatigue testing machine. A strain gauge was attached to the 0.57Rf position from the R end 32E of the fillet R portion 32 of the test axle, and a static bending load was applied before the fatigue tests to measure stress. Then, the test force was determined such that the stress was 330 MPa, and the aforementioned fatigue test was performed. In the fatigue tests, the stress ratio applied to the test axle was set to -1, and the test frequency was set to 1 to 20 Hz. The test environment was room temperature in air, and the fatigue test was terminated when no macrocracks were observed after $10^7$ test cycles.

When no macrocracks were observed after the fatigue test, the test axle was taken out from the wheel jig, and the formation of fatigue cracks on the surface of the fitting portion 2 was examined. In the examination, wear powder on the surface of the fitting portion 2 was wiped off, and the surface was polished with a buff using alumina polishing powder. Thereafter, the surface of the fitting portion 2 was observed at a magnification of 100x to 400x using a video microscope, and the presence or absence of cracks was observed, and if a crack was formed, the length of the crack on the observed surface was determined.

[Reference total case depth $C_{AT}$ measurement test]

Using the test axle after the test, the total case depths at the 0.23Rf position and the 0.57Rf position in the axial direction of the test axle from the R end 32E toward the parallel portion 31 side were determined using a macroscopic structure test in accordance with JIS G 0559: 2019 as follows. A sample having a surface (referred to as a "measurement surface" hereinafter) whose cross section included the 0.23Rf position and the 0.57Rf position and being parallel to the center axis C1 was taken. The measurement surface of the sample was immersed in Nital etching reagent for approximately 10 seconds to reveal the microstructure by etching. On the etched measurement surface, the interface between the hardened layer HL and the base metal portion BM was clearly confirmed. In view of this, the total case depths at the 0.23Rf position and the 0.57Rf position were determined based on the confirmed interface. Of the two total case depths obtained, the smaller value was used as the reference total case depth $C_{AT}$ (mm).

Note that, in the test axles of all test samples, the total area fraction of ferrite and pearlite in the microstructure of the base metal portion BM was 70% or more, and in a region from the surface of the hardened layer HL to a depth equal to half the total case depth, the total area fraction of martensite and bainite was 80% or more.

[Table 2]

| Test No. | Steel material number | DW [mm] | DA [mm] | DW/DA | Rf [mm] | $C_{AT}$ [mm] | Rcr [mm] | Rf≥Rcr? | Fatigue test results | Fitting portion crack length | Remarks |
|---|---|---|---|---|---|---|---|---|---|---|---|
| 1 | 1 | 169 | 130 | 1.30 | 25.0 | 10.7 | 21.3 | T | $1.0 \times 10^7$ test cycles durability | - | Inventive Example |
| 2 | 1 | 169 | 130 | 1.30 | 60.0 | 10.7 | 21.3 | T | $1.0 \times 10^7$ test cycles durability | <30 μm | Inventive Example |
| 3 | 1 | 140 | 130 | 1.08 | 60.0 | 10.9 | 21.6 | T | $1.0 \times 10^7$ test cycles durability | 1200 μm | Comparative Example |
| 4 | 1 | 169 | 130 | 1.30 | 100.0 | 11.1 | 21.9 | T | $1.0 \times 10^7$ test cycles durability | 150 μm | Comparative Example |
| 5 | 1 | 169 | 130 | 1.30 | 70.0 | 11.0 | 21.7 | T | $1.0 \times 10^7$ test cycles durability | 100 μm | Comparative Example |
| 6 | 1 | 169 | 130 | 1.30 | 20.0 | 11.3 | 22.1 | NT | Macrocrack after $3.4 \times 10^5$ test cycles (surface initiating point) | - | Comparative Example |
| 7 | 2 | 169 | 130 | 1.30 | 25.0 | 10.5 | 21.0 | T | $1.0 \times 10^7$ test cycles durability | - | Inventive Example |
| 8 | 2 | 169 | 130 | 1.30 | 60.0 | 10.6 | 21.2 | T | $1.0 \times 10^7$ test cycles durability | <30 μm | Inventive Example |
| 9 | 2 | 140 | 130 | 1.08 | 60.0 | 10.6 | 21.2 | T | $1.0 \times 10^7$ test cycles durability | 1300 μm | Comparative Example |
| 10 | 2 | 169 | 130 | 1.30 | 100.0 | 10.7 | 21.3 | T | $1.0 \times 10^7$ test cycles durability | 180 μm | Comparative Example |
| 11 | 2 | 169 | 130 | 1.30 | 70.0 | 11.1 | 21.9 | T | $1.0 \times 10^7$ test cycles durability | 110 μm | Comparative Example |
| 12 | 2 | 169 | 130 | 1.30 | 20.0 | 11.0 | 21.7 | NT | Macrocrack after $2.6 \times 10^5$ test cycles (surface initiating point) | - | Comparative Example |
| 13 | 1 | 146 | 130 | 1.12 | 25.0 | 10.7 | 21.3 | T | $1.0 \times 10^7$ test cycles durability | <30 μm | Inventive Example |

(continued)

| Test No. | Steel material number | DW [mm] | DA [mm] | DW/DA | Rf [mm] | $C_{AT}$ [mm] | Rcr [mm] | Rf≥Rcr? | Fatigue test results | Fitting portion crack length | Remarks |
|---|---|---|---|---|---|---|---|---|---|---|---|
| 14 | 2 | 146 | 130 | 1.12 | 25.0 | 10.8 | 21.4 | T | $1.0\times10^7$ test cycles durability | <30 μm | Inventive Example |
| 15 | 3 | 169 | 130 | 1.30 | 58.0 | 10.8 | 21.4 | T | $1.0\times10^7$ test cycles durability | <30 μm | Inventive Example |
| 16 | 4 | 169 | 130 | 1.30 | 58.0 | 11.1 | 21.9 | T | $1.0\times10^7$ test cycles durability | <30 μm | Inventive Example |
| 17 | 5 | 169 | 130 | 1.30 | 58.0 | 11.0 | 21.7 | T | $1.0\times10^7$ test cycles durability | <30 μm | Inventive Example |
| 18 | 6 | 169 | 130 | 1.30 | 58.0 | 10.9 | 21.6 | T | $1.0\times10^7$ test cycles durability | <30 μm | Inventive Example |
| 19 | 7 | 169 | 130 | 1.30 | 58.0 | 11.0 | 21.7 | T | $1.0\times10^7$ test cycles durability | <30 μm | Inventive Example |
| 20 | 8 | 169 | 130 | 1.30 | 58.0 | 10.6 | 21.2 | T | $1.0\times10^7$ test cycles durability | <30 μm | Inventive Example |
| 21 | 9 | 169 | 130 | 1.30 | 58.0 | 10.5 | 21.0 | T | $1.0\times10^7$ test cycles durability | <30 μm | Inventive Example |
| 22 | 10 | 169 | 130 | 1.30 | 58.0 | 10.7 | 21.3 | T | $1.0\times10^7$ test cycles durability | <30 μm | Inventive Example |
| 23 | 11 | 169 | 130 | 1.30 | 58.0 | 10.9 | 21.6 | T | $1.0\times10^7$ test cycles durability | <30 μm | Inventive Example |
| 24 | 12 | 169 | 130 | 1.30 | 58.0 | 10.8 | 21.4 | T | $1.0\times10^7$ test cycles durability | <30 μm | Inventive Example |

[Evaluation results]

In the column "Rf ≥ Rer?" in Table 2, "T" is shown when the radius of curvature Rf was greater than or equal to the critical radius of curvature Rcr, and "NT" is shown when the radius of curvature Rf was less than the critical radius of curvature Rcr. Further, in Table 2, "-" for test numbers 1, 6, 7, and 12 in the "Fitting portion crack length" means that no cracks were observed. Referring to Table 2, test numbers 1, 2, 7, 8, and 13 to 24 satisfied Features 1 to 3. Thus, in the fatigue test, no macrocracks were observed after $1\times10^7$ test cycles, and the non-fitting portion 3 had a sufficient fatigue strength. Furthermore, the crack on the surface of the fitting portion 2 was also very small compared to the comparative examples of test numbers 3 to 6 and 9 to 12, and the fitting portions 2 also had sufficient fatigue limits.

On the other hand, DW/DA was less than 1.10 in the test numbers 3 and 9. Thus, although no macrocracks were observed after $1.0\times10^7$ test cycles, large cracks were formed in the fitting portions 2, and the fitting portions 2 did not have sufficient fatigue limits.

The test numbers 4, 5, 10, and 11 had excessively large radii of curvature Rf. Thus, although no macrocracks

**EP 4 660 341 A1**

were observed after $1.0\times10^7$ test cycles, relatively large cracks were formed in the fitting portions 2, and the fitting portions 2 did not have sufficient fatigue limits.

In the test numbers 6 and 12, the radius of curvature Rf was less than the critical radii of curvature Rcr (mm). Thus, macrocracks with several tens of millimeters were formed on the surface of the fillet R portion (i.e., the surface of the non-fitting portion 3) after less than $1.0\times10^7$ test cycles, and the non-fitting portions 3 did not have sufficient fatigue limits.

An embodiment of the present disclosure has been described above. However, the embodiment described above is merely an example for carrying out the present disclosure. Therefore, the present disclosure is not limited to the above-described embodiment, and can be implemented by appropriately modifying the above embodiment within a range that does not depart from the gist of the present disclosure.

REFERENCE SIGNS LIST

1    Railway axle
2    Fitting portion
3    Non-fitting portion
31   Parallel portion
32   Fillet R portion
HL  Hardened layer
BM  Base metal portion

**Claims**

1. A railway axle, comprising:

   a fitting portion that has a circular columnar shape having a diameter DW mm and is press-fittable to a railway wheel; and
   a non-fitting portion continuous with the fitting portion,
   wherein the non-fitting portion includes:

   a circular columnar parallel portion having a diameter DA mm that is smaller than the diameter DW mm, and
   a fillet R portion that is disposed between the fitting portion and the parallel portion and has a surface that is curved and recessed in a cross section including a center axis of the railway axle,

   the fitting portion and the non-fitting portion include:

   a hardened layer formed in a surface layer of the fitting portion and a surface layer of the non-fitting portion, and
   a base metal portion located inward of the hardened layer,

   a chemical composition of the base metal portion contains, in mass%,
   C: 0.30 to 0.42%,
   Si: 0.10 to 0.50%,
   Mn: 0.40 to 1.20%,
   P: more than 0% and 0.020% or less,
   S: more than 0% and 0.0400% or less,
   N: more than 0% and 0.0200% or less,
   O: more than 0% and 0.0040% or less,
   Ca: 0 to 0.0010%,
   Cr: 0 to 0.30%,
   Mo: 0 to 0.10%,
   Cu: 0 to 0.30%,
   Ni: 0 to 0.30%,
   Al: 0 to 0.100%,
   V: 0 to 0.060%,
   Ti: 0 to 0.020%,
   Nb: 0 to 0.030%, and

23

B: 0 to 0.0050%,

with the balance being Fe and impurities,

DW/DA, which is a ratio of the diameter DW to the diameter DA, is 1.10 to 1.30, and

a radius of curvature Rf is greater than or equal to a critical radius of curvature Rer mm defined by Formula (1) and smaller than or equal to 60.0 mm,

[Expression 1]

$$Rcr=0.0822DA \cdot \exp\left(\frac{8.38C_{AT}}{DA}\right) \quad (1)$$

where Rf is a radius of curvature of a portion of a surface of the fillet R portion in a cross section including a center axis of the railway axle, the portion being adjacent to a surface of the parallel portion, and a reference total case depth $C_{AT}$ mm is a smaller depth out of total case depths at a 0.23Rf position and a 0.57Rf position in an axial direction of the railway axle from an R end of the fillet R portion toward the parallel portion side, the R end being an end that is in contact with the parallel portion.

2. The railway axle according to claim 1,
   wherein a chemical composition of the base metal portion contains, in mass%, one or more types of element selected from the group consisting of:

   Ca: 0.0001 to 0.0010%,
   Cr: 0.01 to 0.30%,
   Mo: 0.01 to 0.10%,
   Cu: 0.01 to 0.30%,
   Ni: 0.01 to 0.30%,
   Al: 0.001 to 0.100%,
   V: 0.001 to 0.060%,
   Ti: 0.001 to 0.020%,
   Nb: 0.001 to 0.030%, and
   B: 0.0001 to 0.0050%.

FIG. 1

FIG. 2

FIG.3

$N = 1.4 \times 10^{43} \sigma^{-14}$

/ : Internal starting point fracture

Number of test cycles at breakage

FIG.4

: Starting position (x, z) [mm]

FIG.5

FIG.6

FIG.7

FIG.8

FIG.9

Radius of curvature of fillet/Diameter of parallel portion Rf/DA

FIG.10

Radius of curvature Rf [mm]

FIG.11

**EP 4 660 341 A1**

## INTERNATIONAL SEARCH REPORT

| International application No. |
|---|
| **PCT/JP2024/002927** |

| A. | CLASSIFICATION OF SUBJECT MATTER |
|---|---|

*C22C 38/00*(2006.01)i; *B60B 37/00*(2006.01)i; *C21D 1/10*(2006.01)i; *C21D 9/00*(2006.01)i; *C22C 38/04*(2006.01)i; *C22C 38/54*(2006.01)i
FI:    C22C38/00 301Z; B60B37/00 A; C21D1/10 Z; C21D9/00 G; C21D9/00 H; C22C38/04; C22C38/54

According to International Patent Classification (IPC) or to both national classification and IPC

| B. | FIELDS SEARCHED |
|---|---|

Minimum documentation searched (classification system followed by classification symbols)

C22C38/00; B60B37/00; C21D1/10; C21D9/00; C22C38/04; C22C38/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/071262 A1 (NIPPON STEEL CORPORATION) 07 April 2022 (2022-04-07) entire text | 1, 2 |
| A | WO 2019/194273 A1 (NIPPON STEEL CORPORATION) 10 October 2019 (2019-10-10) entire text | 1, 2 |
| A | WO 2017/033818 A1 (NIPPON STEEL & SUMITOMO METAL CORPORATION) 02 March 2017 (2017-03-02) entire text | 1, 2 |
| A | JP 2011-511214 A (V & M DO BRASIL S/A) 07 April 2011 (2011-04-07) entire text | 1, 2 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

31

**INTERNATIONAL SEARCH REPORT**
Information on patent family members

International application No.

**PCT/JP2024/002927**

| Patent document cited in search report | | | Publication date (day/month/year) | Patent family member(s) | | | Publication date (day/month/year) |
|---|---|---|---|---|---|---|---|
| WO | 2022/071262 | A1 | 07 April 2022 | US | 2023/0271635 | A1 | |
| | | | | entire text | | | |
| | | | | EP | 4223890 | A1 | |
| | | | | CN | 116194601 | A | |
| WO | 2019/194273 | A1 | 10 October 2019 | EP | 3778969 | A1 | |
| | | | | entire text | | | |
| | | | | CN | 112236538 | A | |
| | | | | JP | 7024860 | B2 | |
| WO | 2017/033818 | A1 | 02 March 2017 | US | 2018/0245189 | A1 | |
| | | | | entire text | | | |
| | | | | EP | 3342896 | A1 | |
| | | | | CA | 2995917 | A1 | |
| | | | | CN | 107923021 | A | |
| | | | | JP | 6465214 | B2 | |
| JP | 2011-511214 | A | 07 April 2011 | US | 2010/0308612 | A1 | |
| | | | | WO | 2009/067773 | A1 | |
| | | | | EP | 2229461 | A1 | |
| | | | | BR | PI 0704944 | A2 | |
| | | | | AR | 69496 | A1 | |
| | | | | CA | 2707502 | A1 | |
| | | | | AU | 2008329579 | A1 | |
| | | | | MX | 2010005968 | A | |
| | | | | KR | 10-2010-0112566 | A | |
| | | | | CN | 101932737 | A | |
| | | | | RU | 2010126505 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10008202 A
- JP 11279696 A
- JP 2000073140 A

**Non-patent literature cited in the description**

- **TAIZO MAKINO ; TAKANORI KATO ; KENJI HIRAKAWA**. Review of the fatigue damage tolerance of high-speed railway axles in Japan. *Engineering Fracture Mechanics*, 2011, vol. 78, 810-825